(19) Europäisches Patentamt
European Patent Office
Office européen des brevets

(11) **EP 4 570 757 A1**

(12) **EUROPEAN PATENT APPLICATION**
published in accordance with Art. 153(4) EPC

(43) Date of publication:
**18.06.2025 Bulletin 2025/25**

(21) Application number: **24793000.1**

(22) Date of filing: **17.04.2024**

(51) International Patent Classification (IPC):
**C01B 33/152** (2006.01)    **C01B 33/146** (2006.01)
**C09K 5/14** (2006.01)    **H01M 10/658** (2014.01)

(52) Cooperative Patent Classification (CPC):
**Y02E 60/10**

(86) International application number:
**PCT/KR2024/005152**

(87) International publication number:
**WO 2024/219815 (24.10.2024 Gazette 2024/43)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.04.2023 KR 20230050758**

(71) Applicant: **LG CHEM, LTD.**
**Seoul 07336 (KR)**

(72) Inventors:
• **KANG, Tae Gyeong**
**Daejeon 34122 (KR)**

• **OH, Kyoung Shil**
**Daejeon 34122 (KR)**
• **OH, Myung Eun**
**Daejeon 34122 (KR)**
• **KIM, Ho Yeon**
**Daejeon 34122 (KR)**
• **UM, Ki Ju**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **HEAT CONTROL MEMBER COMPRISING WET-GEL BLANKET**

(57)    The present invention relates to a heat control member including a wet gel blanket, and a battery including the heat control member.

Fig. 1

EP 4 570 757 A1

# EP 4 570 757 A1

**Description**

## TECHNICAL FIELD

### Cross-reference to Related Applications

This application claims the benefit of Korean Patent Application No. 10-2023-0050758, filed on April 18, 2023, in the Korean Intellectual Property Office, the disclosure of which is incorporated herein in its entirety by reference.

### Technical Field

The present invention relates to a heat control member including a wet gel blanket, and a battery including the heat control member.

## BACKGROUND ART

In order to reliably control heat from a heat-generating area in a small space and to provide safety for products and prevention of fire propagation, suitable heat insulation is required in the fields of electronics, industrial, and automotive technologies. A heat insulation sheet with excellent properties when compressed may be useful, for example, as a separator in a lithium-ion battery module.

More specifically, various heat insulation materials including aerogel are being used to prevent fires caused by battery thermal runaway, which occur in electric vehicles, electric ships, and the like. However, it is difficult to fundamentally prevent the outbreak of fires with a heat insulation function alone. Particularly, since there is a limit to the space in which a heat control member may be applied inside a battery, it is difficult to secure the insulation thickness necessary to block sources of fires, so that it is only possible to delay the propagation of fires as much as possible.

Electronic products such as laptops, OLEDs, or TVs have hot spots caused by heat sources, which may reduce the emotional quality perceived by consumers due to partial heat dissipation from the surface of a device. In addition, if the heat is not properly diffused to the outside due to the use of a simple heat insulation material, excessively accumulated heat may cause system failure, shorten the lifespan of a product, or even cause explosion or fire. In order to solve problems caused by such heat generation, various heat insulation materials have been applied, but until now, an optimal heat insulation material which is thin and has excellent heat insulation performance has not been developed, so that various research and technology development on heat insulation are being conducted.

In order to solve the above-described typical problems, there are cases of applying aerogel, which is attracting attention as a high-efficiency heat insulation material. Aerogel is a highly porous material composed of nanoparticles, and has a high porosity, a large specific surface area, and a low thermal conductivity, thereby attracting attention for its used as a heat insulation material, a soundproofing material, and the like having high efficiency.

Meanwhile, such aerogel has very low mechanical strength due to the porous structure thereof, so that an aerogel composite are prepared and used by impregnating and combining a fiber such as an inorganic fiber or organic fiber, which is a typical heat insulation fiber, with aerogel, and the aerogel composite has weak adhesion between the fiber and the aerogel, so that aerogel particles are separated during such a processing process as cutting, bending, or the like, thereby generating dust and degrading durability, which may result in damage to a device and the like when the aerogel composite is applied as an heat insulation material for electronic products.

Therefore, there is a high need to develop a material capable of preventing flames from ignition and explosion of a battery module and a battery pack from spreading to an adjacent battery module regardless of a in capacity of a battery and an increase in size of the battery module and the battery pack.

## DISCLOSURE OF THE INVENTION

### TECHNICAL PROBLEM

An object of the present invention is to provide a heat control member capable of effectively implementing heat insulation and fire occurrence suppression performance by including a wet gel blanket having a moisture content of 50 wt% or greater.

### TECHNICAL SOLUTION

In order to achieve the above-described object, the present invention provides a heat control member, a battery including the heat control member, and a method for producing the heat control member.

(1) The present invention provides a heat control member including a wet gel blanket having a moisture content of 50 wt% or greater according to Equation 1 below, and a case accommodating the wet gel blanket therein.

$$[\text{Equation 1}]$$

$$\text{Moisture content (\%)} = [(a-b)/a] \times 100$$

In Equation 1 above, a is the weight of the wet gel blanket before being dried, and b is the weight of the wet gel blanket after being dried in a convection oven at 150 °C for 24 hours.

(2) In (1) above, the present invention provides a heat control member, wherein the wet gel blanket has a moisture content of 60% to 90%.

(3) In (1) or (2) above, the present invention provides a heat control member, wherein after the wet gel blanket is dried in a convection oven at 150 °C for 24 hours, the average pore size of the wet gel is 1 nm to 50 nm.

(4) In any one among (1) to (3) above, the present invention provides a heat control member, wherein after the wet gel blanket is dried in a convection oven at 150 °C for 24 hours, the thermal conductivity of the wet gel is 30 mW/mK to 70 mW/mK.

(5) In any one among (1) to (4) above, the present invention provides a heat control member, wherein the wet gel blanket is a silica wet gel blanket.

(6) In any one among (1) to (5) above, the present invention provides a heat control member, wherein the wet gel blanket includes wet gel and a substrate for a blanket, wherein the substrate for a blanket is one or more selected from the group consisting of a film, a sheet, a net, a fiber, a porous body, a foam body, and a non-woven fabric body.

(7) In any one among (1) to (6) above, the present invention provides a heat control member, wherein the case is a pouch.

(8) In (7) above, the present invention provides a heat control member, wherein the pouch is made of polyethylene (PE), polyester (PET), polypropylene (PP), aluminum, or a composite material thereof.

(9) The present invention provides a battery including the heat control member according to any one among (1) to (8) above.

(10) The present invention provides a method for producing a heat control member, wherein the method includes 1) preparing a silica sol, 2) preparing a case accommodating a substrate for a blanket thereinside, 3) injecting the silica sol into the case to impregnate the substrate for a blanket with the silica sol and then sealing the case, and 4) gelling the silica sol impregnated into the substrate for a blanket to form a silica wet gel blanket.

## ADVANTAGEOUS EFFECTS

A wet gel blanket included in a heat control member according to the present invention has a high content of internal moisture, thereby exhibiting excellent endothermic and extinguishing actions, so that the aerogel blanket may be used in an article to effectively prevent fire occurrence and fire propagation functions. In addition, compared to those of an aerogel blanket which has been used as a typical heat insulation material, the production process has been shortened and production costs have been reduced, so that the economic feasibility has also been improved.

## BRIEF DESCRIPTION OF THE DRAWINGS

FIG. 1 is a graph showing the pore distribution of wet gel blankets of Examples 2 to 4 after being dried; and
FIG. 2 is a schematic diagram showing a method for evaluating flame blocking performance.

## MDOE FOR CARRYING OUT THE INVENTION

Hereinafter, the present invention will be described in more detail to facilitate understanding of the present invention.

It will be understood that words or terms used in the description and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Hereinafter, the present invention will be described in detail.

A heat control member of the present invention is characterized by including a wet gel blanket having a moisture content of 50 wt% or greater according to Equation 1 below, and a case accommodating the wet gel blanket therein.

[Equation 1]

$$\text{Moisture content (\%)} = [(a-b)/a] \times 100$$

In Equation 1 above, a is the weight of the wet gel blanket before being dried, and b is the weight of the wet gel blanket after being dried in a convection oven at 150 °C for 24 hours.

In the present invention, the "wet gel" refers to a product having a network structure created by a gelation reaction of a sol, and refers to gel containing a solvent in a state before being dried. The wet gel contains a large amount of water thereinside, and thus, when exposed to high temperatures such as thermal runaway of a battery, an endothermic reaction occurs as the water evaporates, and an action of not increasing the temperature of the opposite side occurs until all the moisture evaporates. In addition, when all the moisture evaporates, so that the drying is completed, the wet gel may function as a silica gel-based blanket heat insulation material having nanopores.

In the wet gel blanket included in the heat control member of the present invention, the wet gel is present in the state of being accommodated and sealed in a case while containing moisture inside the pores thereof, and thus, does not usually act as a heat insulation material, but in the event of an issue such as thermal runaway, performs a role of controlling heat when the internal moisture evaporates.

In the present invention, the moisture content according to Equation 1 above is the content of moisture contained inside the wet gel blanket, which represents the ratio of the weight occupied by the moisture in the total weight including the wet gel and the blanket. This may be calculated from the amount of evaporated moisture obtained through Equation 1 by comparing the weight of the wet gel blanket before being dried and the weight thereof decreased after being dried in a convection oven at 150 °C for 24 hours.

In the present invention, the moisture content according to Equation 1 above is 50 wt% or greater, and more specifically, may be 60% to 90%, 50 wt% or greater, 60% to 90%, 60% or greater, 65% or greater, 90% or less, or 85% or less.

In the present invention, the wet gel may have an average pore size of 1 nm to 50 nm, specifically 5 nm to 50 nm, and more specifically 10 nm to 40 nm. The average pore size may be measured after drying the wet gel blanket in a convection oven at 150 °C for 24 hours.

As described above, the wet gel used in the present invention has properties of having a small average pore size, and thus, may exhibit excellent heat insulation performance.

In the present invention, the wet gel blanket may have a thermal conductivity of 30 mW/mK to 70 mW/mK, specifically 40 mW/mK to 60 mW/mK. The thermal conductivity may be measured after drying the wet gel blanket in a convection oven at 150 °C for 24 hours.

Through the above-described properties, the heat control member of the present invention may suppress the spreading of fires through the endothermic function at the early stage of the fires, and thereafter, may act as a heat insulation material to effectively block heat transfer to surrounding areas.

In the present invention, the wet gel blanket includes a wet gel and a substrate for a blanket, and here, the substrate for a blanket according to an embodiment of the present invention may specifically be a porous substrate. If a porous substrate for a blanket is used, a silica sol easily penetrates into the substrate, and thus, forms a wet gel uniformly inside the substrate for a blanket, so that a wet gel blanket produced may have excellent heat insulation.

A substrate for a blanket which may be used according to an embodiment of the present invention may be a film, a sheet, a net, a fiber, a porous body, a foam body, a non-woven fabric body, or a laminate body of two or more layers thereof. In addition, depending on the use thereof, the substrate for a blanket may have surface roughness formed or patterned on the surface thereof. More specifically, the substrate for a blanket may be a fiber capable of further improving heat insulation performance by including a space or a void through which a wet gel may be easily inserted into the substrate for a blanket. In addition, the substrate for a blanket may preferably have low thermal conductivity.

Specifically, the substrate for a blanket may be polyamide, polybenzimidazole, polyaramide, an acryl resin, a phenol resin, polyester, polyetheretherketone (PEEK), polyolefin (e.g., polyethylene, polypropylene, a copolymer thereof, or the like), cellulose, carbon, cotton, wool, hemp, a non-woven fabric, glass fiber, ceramic wool, ceramic paper, or the like, and more specifically, the substrate for a blanket in the present invention may be ceramic paper.

In the present invention, the case accommodates the wet gel blanket, and the form in which the wet gel blanket is sealed is not limited. In addition, the case may have a pouch shape, a square shape, a cylinder shape, or the like, but is not limited thereto, and any case that can accommodate the wet gel blanket and be suitably sealed and included in a heat control member may be applied.

A material of the pouch is not particularly limited, and a material capable of effectively blocking moisture, for example, polyethylene (PE), polyester (PET), polypropylene (PP), aluminum, or a composite material thereof may be used.

In addition, the heat control member of the present invention may be included and used in a battery.

The heat control member of the present invention contains a large amount of water, and thus, may perform an endothermic reaction by evaporation of the water such that the heat is not transferred to an adjacent cell in the event of thermal runaway of a battery cell, and may effectively cool a cell in which thermal runaway occurs, thereby extinguishing a fire.

In addition, after all of internal moisture evaporates, the heat control member acts as a heat insulation member to effectively block the transfer of uncooled heat from the cell in which the thermal runaway has occurred to an adjacent cell. As a result, it is possible to prevent chain thermal runaway of battery cells and fires in electric vehicles.

Specifically, the heat control member of the present invention may be disposed on the outside of a bus bar for electrical connection of electrode leads, or may be applied to at least a portion of the inside of a battery pack case, and thus, may prevent the inflow of more oxygen than the minimum amount of oxygen for combustion into a battery module and a battery pack in which ignition and flames have occurred, and may prevent heat and the flames inside the battery module and the battery pack from spreading to the outside.

Specifically, in the event of ignition of a battery module, the heat control member of the present invention first effectively cools off a cell through an endothermic action, and thereafter, acts as a high-performance heat insulation material having micropores, and thus, may perform both fire spreading prevention and subsequent treatment functions.

In addition, the wet gel blanket of the present invention may be a silica wet gel blanket, and for example, the heat control member of the present invention may be produced by the following method.

Specifically, the heat control member of the present invention may be produced by a method including 1) preparing a silica sol, 2) preparing a case accommodating a substrate for a blanket thereinside, 3) injecting the silica sol into the case to impregnate the substrate for a blanket with the silica sol and then sealing the case, and 4) gelling the silica sol impregnated into the substrate for a blanket to form a silica wet gel blanket.

Step 1)

Step 1 is a step for preparing a silica sol, and the silica sol may be prepared by mixing a silica precursor and a gelation catalyst, and if necessary, water may be further added thereto.

The silica precursor may specifically be a water glass solution, and in the silica sol, the gelation catalyst may be introduced in an amount of 2.8 wt% to 17 wt% with respect to water glass in the water glass solution.

The water glass solution may be a diluted solution in which distilled water is added to water glass and then mixed therewith, and the water glass may be a sodium silicate, a potassium silicate, or a lithium silicate, which is an alkali silicate ($Na_2SiO_3$) obtained by melting silicon dioxide ($SiO_2$) and alkali.

The water glass dispersion may contain 3 wt% to 30 wt% of silicon dioxide ($SiO_2$). If the silicon dioxide is contained in the water glass dispersion in a lower content than the above-described range, a gel structure may not be properly formed, and if the silicon dioxide is contained therein in a higher content than the above-described range, the silicon dioxide may be precipitated together upon the introduction of the catalyst, and gel having non-uniform pores may be formed to degrade the pore size and the specific surface area.

The gelation catalyst is not particularly limited, and any one or more among an organic acid, an inorganic acid, and a carbonic acid ester may be used, and for example, one or more selected from the group consisting of acetic acid, oxalic acid, nitric acid, hydrochloric acid, sulfuric acid, hydrofluoric acid, and ethylene carbonate may be used. Specifically, the gelation catalyst may be ethylene carbonate.

The acid catalyst may be included in an amount which allows the pH of the silica sol to be 4 to 8. If the pH of the silica sol is out of the above-described range, the gelation in Step 3) to be described later may not be easily achieved, or a gelation rate may be too low, so that processability may be degraded.

Step 2)

Step 2) is a step of preparing a case accommodating a substrate for a blanket thereinside.

When accommodating a substrate for a blanket inside a case, for example, if the case is a pouch, it is possible to introduce the substrate for a blanket through one surface of the pouch with three other surfaces sealed, or it is also possible to produce a pouch with one open side by positioning films respectively above and below the substrate for a blanket and attaching the films on the outer side of three surfaces of the substrate for a blanket to each other.

Step 3)

Step 3) is a step of injecting the silica sol into the case to impregnate the substrate for a blanket with the silica sol and then sealing the case.

After the silica sol is all injected into the case, the open surface of the case may be sealed to seal the case. At this time, in order to sufficiently remove air inside the case, the sealing process may be performed in a low vacuum state of 1 Torr to 760 Torr. In order to promote the bonding between the substrate for a blanket and the silica sol inside the sealed case, the substrate for a blanket may be lightly pressed to be sufficiently impregnated. Thereafter, the substrate for a blanket may be pressed to a predetermined thickness at a constant pressure to produce a silica wet gel blanket with an even thickness in Step 4) to be described later.

Step 4)

Step 4) is a step of gelling the silica sol impregnated into the substrate for a blanket to form a silica wet gel blanket.

Here, the gelation may be a sol-gel reaction, and the "sol-gel reaction" may be forming a network structure from a silicon unit precursor material.

Here, the network structure may be a planar mesh structure in which specific polygons having one or more types of atomic arrangement are linked to each other, or a structure in which specific polyhedrons share their vertices, edges, faces, and the like with each other to form a three-dimensional skeletal structure.

The production method according to an embodiment of the present invention may further perform a step of aging a produced silica wet gel blanket after the gelation of Step 4) above.

The aging is not particularly limited, but may be performed, for example, by leaving the produced silica wet gel blanket to stand at a temperature of 50 °C to 90 °C for one hour to 24 hours.

The production method according to an embodiment of the present invention performs the aging after producing a silica wet gel blanket, so that the network structure of wet gel in the silica wet gel blanket may be further firmly formed, and accordingly, pore properties may be excellent.

**Examples**

Hereinafter, the present invention will be described in more detail with reference to examples. However, the following examples are merely illustrative of the present invention and are not intended to limit the scope of the present invention.

**Example 1**

12 parts by weight of water glass and 75 parts by weight of water were mixed to prepare a silica sol. Thereafter, 2 parts by weight of acetic acid was introduced as a gelation catalyst into the silica sol to prepare a catalyzed sol. 3 mm-thick ceramic paper was introduced as a substrate for a blanket into a PE/aluminum/PP pouch with three sealed sides, and then the catalyzed sol was injected into the pouch to be impregnated into the substrate for a blanket, and one open side of the pouch was depressurized using a vacuum sealing machine and applied with heat to be sealed. The silica sol impregnated into the substrate for a blanket in the sealed pouch was gelled to prepare a wet gel blanket.

**Examples 2 to 6**

A wet gel blanket was prepared in the same manner as in Example 1, except that changes were made as shown in Table 1 below.

**Example 7**

21 parts by weight of water glass and 67 parts by weight of water were mixed to prepare a silica sol. Thereafter, 5 parts by weight of acetic acid was introduced as a gelation catalyst into the silica sol to prepare a catalyzed sol. 2 mm-thick ceramic paper was introduced as a substrate for a blanket into a PE/aluminum/PP pouch with three sealed sides, and then the catalyzed sol was injected into the pouch to be impregnated into the substrate for a blanket, and one open side of the pouch was depressurized using a vacuum sealing machine and applied with heat to be sealed. The silica sol impregnated into the substrate for a blanket in the sealed pouch was gelled to prepare a wet gel blanket.

**Example 8**

21 parts by weight of water glass and 67 parts by weight of water were mixed to prepare a silica sol. Thereafter, 5 parts by weight of acetic acid was introduced as a gelation catalyst into the silica sol to prepare a catalyzed sol. 3 mm-thick organic fiber was introduced as a substrate for a blanket into a PE/aluminum/PP pouch with three sealed sides, and then the catalyzed sol was injected into the pouch to be impregnated into the substrate for a blanket, and one open side of the pouch was depressurized using a vacuum sealing machine and applied with heat to be sealed. The silica sol impregnated into the substrate for a blanket in the sealed pouch was gelled to prepare a wet gel blanket.

### Example 9

20 parts by weight of water glass and 64 parts by weight of water were mixed to prepare a silica sol. Thereafter, 5 parts by weight of acetic acid was introduced as a gelation catalyst into the silica sol to prepare a catalyzed sol. PET films were respectively positioned on an upper surface and a lower surface of 3 mm-thick ceramic paper, and the PET films on the upper and lower surfaces were attached using an acrylic adhesive along the outer side of three sides of the ceramic paper to seal the three sides. The catalyzed sol was injected into the pouch through one open side to be impregnated into the substrate for a blanket, and the PET film on the one open side was attached using an acrylic adhesive and sealed. The silica sol impregnated into the substrate for a blanket in the sealed pouch was gelled to prepare a wet gel blanket.

[Table 1]

|  | Water glass weight (wt%) | Water weight (wt%) | Catalyst type | Catalyst weight (wt%) | Fiber weight (wt%) |
|---|---|---|---|---|---|
| Example 1 | 12 | 75 | Acetic acid | 2 | 11 |
| Example 2 | 20 | 64 | Acetic acid | 5 | 11 |
| Example 3 | 28 | 54 | Acetic acid | 7 | 11 |
| Example 4 | 27 | 59 | Ethylene carbonate | 3 | 11 |
| Example 5 | 51 | 37 | Ethylene carbonate | 2 | 10 |
| Example 6 | 71 | 17 | Ethylene carbonate | 2 | 9 |
| Example 7 | 21 | 67 | Acetic acid | 5 | 7 |
| Example 8 | 21 | 67 | Acetic acid | 5 | 7 |
| Example 9 | 20 | 64 | Acetic acid | 5 | 11 |

### Comparative Example 1

28 parts by weight of water glass and 54 parts by weight of water were mixed to prepare a silica sol. Thereafter, 7 parts by weight of acetic acid was introduced as a gelation catalyst into the silica sol to prepare a catalyzed sol. 3 mm-thick ceramic paper was placed in a mold, impregnated with the catalyzed sol, and then gelled to prepare a wet gel blanket.
The prepared wet gel blanket was dried in a convection oven at 150 °C for 24 hours to remove as much moisture as possible inside the gel to obtain a dried blanket. The dried blanket was introduced into a PE/aluminum/PP pouch with three sealed sides, and one open side thereof was depressurized using a vacuum sealing machine and applied with heat to be sealed.

### Comparative Example 2

Tetraethyl orthosilicate (TEOS) and water were mixed in a molar ratio of 1:4 and ethanol having a weight ratio of 1:1 with respect to the TEOS was added thereto to prepare a silica precursor solution. In order to promote hydrolysis, an hydrochloric acid was added such that the pH of the silica precursor solution was to be 3 or less and was stirred for 2 hours or more to prepare a hydrated TEOS solution. Ethanol having a weight ratio of 1:4 with respect to the hydrated TEOS solution was added to prepare a silica sol. In order to improve heat insulation performance and flame retardant performance, an opacifying agent and a flame retardant were added in an amount of 0.2 parts by weight based on 100 parts by weight of the silica sol.
A base catalyst solution (5 wt% of NaOH aqueous solution) having a volume ratio of 99:1 with respect to the catalyzed sol was added to prepare a catalyzed sol. The catalyzed sol was impregnated into a substrate for a blanket and gelled. Thereafter, aging and surface modification were performed in a 10 wt% TMES solution at 60 °C for 16 hours. The prepared wet gel blanket was placed in a supercritical extractor and then $CO_2$ was injected thereto, and thereafter, the temperature inside the extractor was raised to 60 °C over the course of 1 hour, and then supercritical drying was performed at 60 °C and 100 bar to prepare a hydrophobic aerogel blanket.

**Comparative Example 3**

0.6 parts by weight of starch was added to 77.4 parts by weight of water and dispersed to prepare an aqueous solution. Thereafter, the aqueous solution was absorbed into 22 parts by weight of a super absorbent polymer (SAP) to prepare hydrogel.

The prepared hydrogel was introduced into a PE/aluminum/PP pouch with three sealed sides, and one open side thereof was depressurized using a vacuum sealing machine and applied with heat to be sealed. The final thickness of the sealed pouch was 3 mm.

**Experimental Example 1: Content of moisture (wt%)**

The weight (a) of the wet gel blanket was measured, and then the wet gel blanket was dried in a convection oven at 150 °C for 24 hours to measure the weight (b) after the drying. The moisture content of the wet gel blanket was measured according to Equation 1 below.

$$[Equation\ 1]$$

$$Moisture\ content\ (\%)\ =\ [(a-b)/a]\ x\ 100$$

**Experimental Example 2: Time(sec) to reach back surface temperature of 100 °C compared to 1000 °C torch**

A sample in a size of 20 cm x 20 cm was prepared and mounted vertically on a stand. A temperature sensor was placed at the center of the front and back surfaces of the mounted sample.

Flame of a torch using butane gas was sprayed onto the position of the temperature sensor on the front surface of the sample, and then the distance between the sample and the torch was adjusted such that the temperature of the front surface was to be 1000 °C. Time taken for the temperature of the back surface of the sample to reach 100 °C was recorded through the temperature sensor on the back surface of the sample.

[Table 2]

|  | Content of moisture in gel (wt%) | Time (sec) for temperature of back surface to reach 100 °C compared to 1000 °C torch |
|---|---|---|
| Example 1 | 83 | 164 |
| Example 2 | 79 | 134 |
| Example 3 | 74 | 107 |
| Example 4 | 79 | 93 |
| Example 5 | 73 | 226 |
| Example 6 | 68 | 152 |
| Example 7 | 82 | 76 |
| Example 8 | 82 | 125 |
| Example 9 | 79 | 98 |
| Comparative Example 1 | 1 | 17 |
| Comparative Example 2 | 0.1 | 23 |
| Comparative Example 3 | 77.4 | 65 |

As shown in Table 2 above, when a torch flame of a high temperature is sprayed onto the sample, the wet gel blanket containing an excessive amount of moisture inside the gel performs an endothermic action until all the moisture evaporates, thereby preventing the temperature of the back surface from exceeding 100 °C, so that there is a significant delay in time taken for the temperature of the back surface to reach 100 °C compared to dried gel without moisture. In addition, in a portion which comes into direct contact with the torch flame, moisture quickly dries up, so that the portion serves as a heat insulation material with nanopores, thereby exhibiting excellent heat insulation performance, and as a result, the time taken for the temperature of the back surface to reach 00 °C is further delayed.

Since Comparative Examples 1 and 2 did not contain moisture in the gel, the temperature of the back surface increased very quickly compared to Examples. Comparative Example 2 produces an aerogel blanket, and thus, has better heat insulation performance than Comparative Example 1, which results in a delayed increase in the temperature of the back surface, but does not perform an endothermic function, so that the temperature of the back surface reaches 100 ° C faster than Examples.

Comparative Example 3 is a case in which hydrogel was used unlike Examples of the present specification in which a silica sol was used, and although the moisture content in the gel thereof was as high as that of Examples, there was no substrate for a blanket in Comparative Example 3 unlike in Examples, and a hard gel structure was not formed, so that it has been confirmed that during the 1000 °C torch test, the sealing of the pouch was broken due to the pressure caused by boiling moisture, and the gel was ejected to the outside. As a result, a large amount of gel was lost, so that Comparative Example 3 exhibited heat insulation performance significantly lower than that of Examples, and when Comparative Example 3 was continuously applied with heat, it has been confirmed that the temperature of the back surface tended to increase at a very fast rate due to no heat insulation structure left thereinside after all the moisture evaporated.

**Experimental Example 3: Observation of pore distribution**

The wet gel blanket was dried in a convection oven at 150 °C for 24 hours to obtain a sample with all the moisture removed. 0.1 g of the dried sample was placed in a glass dedicated to BET, connected to pre-treatment equipment, and then pre-treated at 150 °C for 12 hours while reducing the pressure to a pressure of 1 Torr to 760 Torr to remove impurities including moisture in the sample. The pore distribution of the pre-treated sample was analyzed by the absorption/desorption amount of nitrogen according to partial pressure ($0.11 < p/p0 < 1$) using a 3 FLEX device of Micrometrics Co.

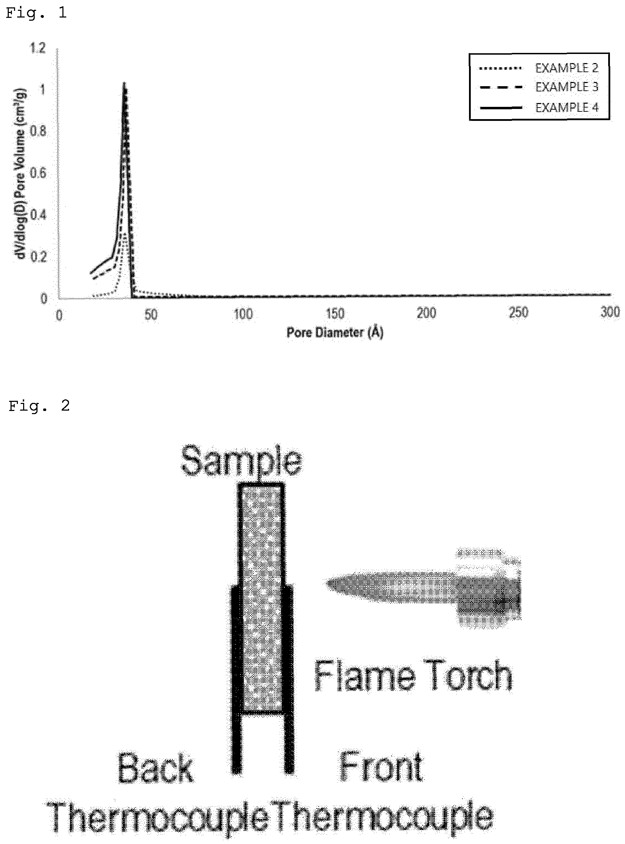

As shown in FIG. 1, it can be seen that the wet gel blankets corresponding to Examples 2 to 4 each exhibit a very uniform and narrow pore distribution after being dried, though which it has been confirmed that the wet gel blankets have excellent heat insulation performance. Particularly, since most pores are in the region of 10 nm to 50 nm, which is the mesopore region, the heat insulation performance is even more excellent, though which it has been determined that the wet gel blankets may each serve as an excellent heat insulation material even after the moisture is dried up due to the exposure to high temperatures.

**Claims**

1. A heat control member comprising:

   a wet gel blanket having a moisture content of 50 wt% or greater according to Equation 1 below; and
   a case accommodating the wet gel blanket therein:

   ```
   [Equation 1]

   Moisture content (%) = [(a-b)/a] x 100
   ```

   wherein in Equation 1 above,

   a is the weight of the wet gel blanket before being dried, and
   b is the weight of the wet gel blanket after being dried in a convection oven at 150 °C for 24 hours.

2. The heat control member of claim 1, wherein the wet gel blanket has a moisture content of 60% to 90%.

3. The heat control member of claim 1, wherein after the wet gel blanket is dried in a convection oven at 150 °C for 24 hours, the average pore size of the wet gel is 1 nm to 50 nm.

4. The heat control member of claim 1, wherein after the wet gel blanket is dried in a convection oven at 150 °C for 24 hours, the thermal conductivity of the wet gel is 30 mW/mK to 70 mW/mK.

5. The heat control member of claim 1, wherein the wet gel blanket is a silica wet gel blanket.

6. The heat control member of claim 1, wherein the wet gel blanket comprises wet gel and a substrate for a blanket, wherein the substrate for a blanket is one or more selected from the group consisting of a film, a sheet, a net, a fiber, a porous body, a foam body, and a non-woven fabric body.

7. The heat control member of claim 1, wherein the case is a pouch.

8. The heat control member of claim 7, wherein the pouch is made of polyethylene (PE), polyester (PET), polypropylene (PP), aluminum, or a composite material thereof.

9. A battery comprising the heat control member of any one of claims 1 to 8.

10. A method for producing a heat control member, the method comprising:

> 1) preparing a silica sol;
> 2) preparing a case accommodating a substrate for a blanket therein;
> 3) injecting the silica sol into the case to impregnate the substrate for a blanket with the silica sol and then sealing the case; and
> 4) gelling the silica sol impregnated into the substrate for a blanket to form a silica wet gel blanket.

Fig. 1

Fig. 2

# EP 4 570 757 A1

## INTERNATIONAL SEARCH REPORT

International application No.

**PCT/KR2024/005152**

### A. CLASSIFICATION OF SUBJECT MATTER

**C01B 33/152**(2006.01)i; **C01B 33/146**(2006.01)i; **C09K 5/14**(2006.01)i; **H01M 10/658**(2014.01)i

According to International Patent Classification (IPC) or to both national classification and IPC

### B. FIELDS SEARCHED

Minimum documentation searched (classification system followed by classification symbols)

C01B 33/152(2006.01); B01J 13/00(2006.01); B32B 27/28(2006.01); C08J 3/075(2006.01); C08J 7/04(2006.01); D21H 17/68(2006.01); D21H 27/12(2006.01); H01M 10/0525(2010.01); H01M 2/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 습윤겔(wet gel), 실리카 졸(silica sol), 함침(impregnation), 블랭킷(blanket), 케이스 (case)

### C. DOCUMENTS CONSIDERED TO BE RELEVANT

| Category* | Citation of document, with indication, where appropriate, of the relevant passages | Relevant to claim No. |
|---|---|---|
| Y | CN 114590001 A (HENAN EIBO AND NEW MATERIALS CO., LTD.) 07 June 2022 (2022-06-07)<br>See paragraphs [0002]-[0034]; claims 1 and 10; and figure 7. | 1-10 |
| Y | CN 114622442 A (CHONGQING UNIVERSITY) 14 June 2022 (2022-06-14)<br>See paragraphs [0065]-[0069]; claims 1 and 7; and example 1. | 1-10 |
| A | WO 2023-009065 A2 (SINGAPORE POLYTECHNIC) 02 February 2023 (2023-02-02)<br>See entire document. | 1-10 |
| A | CN 112054133 A (JIANGSU PAN ASIAN MICROVENT TECHNOLOGY CO., LTD.) 08 December 2020 (2020-12-08)<br>See entire document. | 1-10 |
| A | CN 114805886 A (EAST CHINA UNIVERSITY OF SCIENCE AND TECHNOLOGY) 29 July 2022 (2022-07-29)<br>See entire document. | 1-10 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 July 2024** | **18 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/005152**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2021-0028129 A (LG CHEM, LTD.) 11 March 2021 (2021-03-11)<br>See entire document. | 1-10 |

Form PCT/ISA/210 (second sheet) (July 2022)

**INTERNATIONAL SEARCH REPORT**
Information on patent family members

International application No.

**PCT/KR2024/005152**

| Patent document cited in search report | | | Publication date (day/month/year) | Patent family member(s) | | | Publication date (day/month/year) |
|---|---|---|---|---|---|---|---|
| CN | 114590001 | A | 07 June 2022 | CN | 114590001 | B | 20 October 2023 |
| CN | 114622442 | A | 14 June 2022 | CN | 114622442 | B | 16 June 2023 |
| WO | 2023-009065 | A2 | 02 February 2023 | KR | 10-2024-0045242 | A | 05 April 2024 |
| | | | | WO | 2023-009065 | A3 | 13 April 2023 |
| CN | 112054133 | A | 08 December 2020 | | None | | |
| CN | 114805886 | A | 29 July 2022 | | None | | |
| KR | 10-2021-0028129 | A | 11 March 2021 | CN | 113165978 | A | 23 July 2021 |
| | | | | CN | 113226677 | A | 06 August 2021 |
| | | | | CN | 113382962 | A | 10 September 2021 |
| | | | | CN | 113382962 | B | 30 January 2024 |
| | | | | CN | 113396134 | A | 14 September 2021 |
| | | | | CN | 113396134 | B | 11 November 2022 |
| | | | | CN | 113423676 | A | 21 September 2021 |
| | | | | CN | 113423676 | B | 07 March 2023 |
| | | | | CN | 113423677 | A | 21 September 2021 |
| | | | | CN | 113423677 | B | 11 July 2023 |
| | | | | CN | 113853361 | A | 28 December 2021 |
| | | | | CN | 113853361 | B | 04 November 2022 |
| | | | | CN | 114007999 | A | 01 February 2022 |
| | | | | EP | 3878811 | A1 | 15 September 2021 |
| | | | | EP | 3878811 | B1 | 17 April 2024 |
| | | | | EP | 3882214 | A1 | 22 September 2021 |
| | | | | EP | 3882214 | B1 | 08 November 2023 |
| | | | | EP | 3901091 | A1 | 27 October 2021 |
| | | | | EP | 3901091 | B1 | 27 March 2024 |
| | | | | EP | 3901092 | A1 | 27 October 2021 |
| | | | | EP | 3901093 | A1 | 27 October 2021 |
| | | | | EP | 3901093 | B1 | 10 May 2023 |
| | | | | EP | 3901094 | A1 | 27 October 2021 |
| | | | | EP | 3901094 | B1 | 26 June 2024 |
| | | | | EP | 4026802 | A1 | 13 July 2022 |
| | | | | EP | 4026803 | A1 | 13 July 2022 |
| | | | | JP | 2022-503551 | A | 12 January 2022 |
| | | | | JP | 2022-515436 | A | 18 February 2022 |
| | | | | JP | 2022-518063 | A | 11 March 2022 |
| | | | | JP | 2022-518064 | A | 11 March 2022 |
| | | | | JP | 2022-518787 | A | 16 March 2022 |
| | | | | JP | 2022-518813 | A | 16 March 2022 |
| | | | | JP | 2022-541827 | A | 27 September 2022 |
| | | | | JP | 2022-542868 | A | 07 October 2022 |
| | | | | JP | 2023-156350 | A | 24 October 2023 |
| | | | | JP | 7105367 | B2 | 22 July 2022 |
| | | | | JP | 7209852 | B2 | 20 January 2023 |
| | | | | JP | 7209853 | B2 | 20 January 2023 |
| | | | | JP | 7229371 | B2 | 27 February 2023 |
| | | | | JP | 7317120 | B2 | 28 July 2023 |
| | | | | JP | 7320664 | B2 | 03 August 2023 |
| | | | | JP | 7322156 | B2 | 07 August 2023 |
| | | | | KR | 10-2021-0028081 | A | 11 March 2021 |

Form PCT/ISA/210 (patent family annex) (July 2022)

# EP 4 570 757 A1

## INTERNATIONAL SEARCH REPORT
### Information on patent family members

| Patent document cited in search report | Publication date (day/month/year) | Patent family member(s) | | Publication date (day/month/year) |
|---|---|---|---|---|
| | | KR 10-2021-0028082 | A | 11 March 2021 |
| | | KR 10-2021-0028083 | A | 11 March 2021 |
| | | KR 10-2021-0028127 | A | 11 March 2021 |
| | | KR 10-2021-0028131 | A | 11 March 2021 |
| | | KR 10-2021-0028132 | A | 11 March 2021 |
| | | KR 10-2021-0038374 | A | 07 April 2021 |
| | | KR 10-2021-0038375 | A | 07 April 2021 |
| | | KR 10-2487009 | B1 | 11 January 2023 |
| | | KR 10-2555087 | B1 | 17 July 2023 |
| | | KR 10-2574283 | B1 | 05 September 2023 |
| | | KR 10-2581268 | B1 | 22 September 2023 |
| | | KR 10-2583201 | B1 | 27 September 2023 |
| | | KR 10-2623026 | B1 | 10 January 2024 |
| | | KR 10-2623027 | B1 | 10 January 2024 |
| | | US 2022-0064010 | A1 | 03 March 2022 |
| | | US 2022-0072734 | A1 | 10 March 2022 |
| | | US 2022-0080377 | A1 | 17 March 2022 |
| | | US 2022-0098046 | A1 | 31 March 2022 |
| | | US 2022-0204350 | A1 | 30 June 2022 |
| | | US 2022-0227635 | A1 | 21 July 2022 |
| | | US 2022-0250922 | A1 | 11 August 2022 |
| | | US 2022-0371902 | A1 | 24 November 2022 |
| | | WO 2021-045356 | A1 | 11 March 2021 |
| | | WO 2021-045483 | A1 | 11 March 2021 |
| | | WO 2021-045484 | A1 | 11 March 2021 |
| | | WO 2021-045514 | A1 | 11 March 2021 |
| | | WO 2021-045528 | A1 | 11 March 2021 |
| | | WO 2021-045533 | A1 | 11 March 2021 |
| | | WO 2021-066482 | A1 | 08 April 2021 |
| | | WO 2021-066492 | A1 | 08 April 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230050758